# FASCICULE DE BREVET EUROPEEN

(11) **EP 3 653 368 B1**
(45) Date de publication et mention de la délivrance du brevet: **15.09.2021**
(21) Numéro de dépôt: 19204463.4
(22) Date de dépôt: 22.10.2019
(51) Int. Cl.: B29C 65/36, B29C 65/00

(54) **PROCÉDÉ DE SOUDAGE PAR INDUCTION DE DEUX PIÈCES À L'AIDE D'AU MOINS UN SUSCEPTEUR PRÉSENTANT DES ÉLÉMENTS CONDUCTEURS DISCONTINUS, ASSEMBLAGE D'AU MOINS DEUX PIÈCES OBTENU À PARTIR DUDIT PROCÉDÉ DE SOUDAGE PAR INDUCTION**
INDUKTIONSSCHWEISSVERFAHREN VON ZWEI TEILEN MITHILFE MINDESTENS EINES SUSZEPTORS, DER DISKONTINUIERLICHE LEITERELEMENTE UMFASST, ZUSAMMENBAU VON MINDESTENS ZWEI MIT DIESEM INDUKTIONSSCHWEISSVERFAHREN ERHALTENEN TEILEN
METHOD FOR INDUCTION WELDING OF TWO PARTS WITH THE HELP OF AT LEAST ONE SUSCEPTOR HAVING DISCONTINUOUS CONDUCTIVE ELEMENTS, ASSEMBLY OF AT LEAST TWO PARTS OBTAINED ACCORDING TO SAID INDUCTION WELDING METHOD

(30) Priorité: 15.11.2018 FR 1860539
(43) Date de publication de la demande: 20.05.2020
(73) Titulaire: Airbus Operations, 31060 Toulouse (FR)
(72) Inventeur: CHOTARD, Florian, 44300 NANTES (FR); TRICHET, Didier, 44600 SAINT-NAZAIRE (FR); FOULADGAR, Javad, 44600 SAINT-NAZAIRE (FR)
(74) Mandataire: Fantin, Laurent

(56) Documents cités:
- EP-A1- 3 112 131
- WO-A1-2018/065769
- WO-A2-2012/175358

## Description

La présente demande se rapporte à un procédé de soudage par induction de deux pièces à l'aide d'au moins un suscepteur présentant des éléments conducteurs discontinus ainsi qu'à un assemblage d'au moins deux pièces obtenu à partir dudit procédé de soudage par induction.

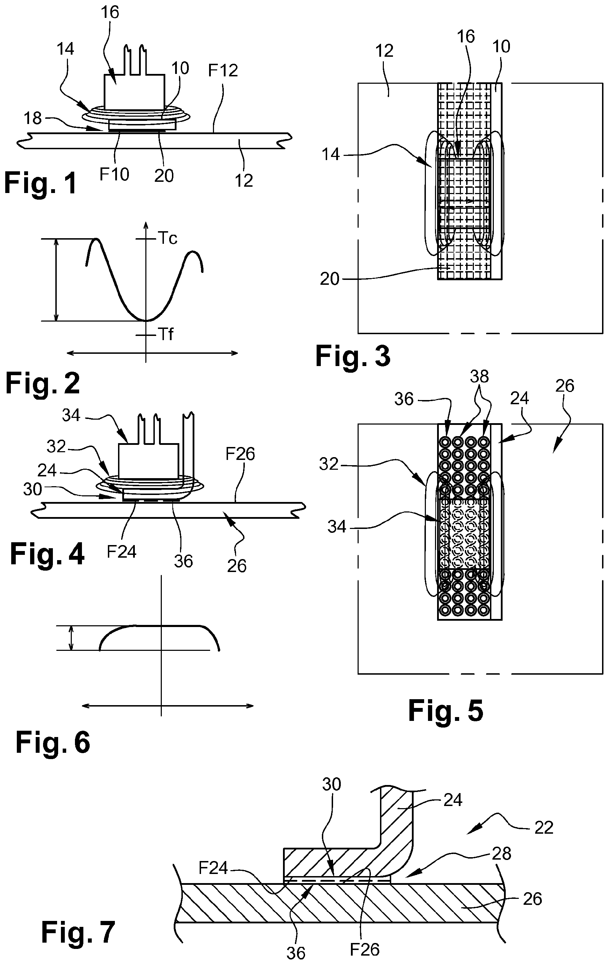

Sur les figures 1 à 3, un procédé de soudage par induction de deux pièces 10, 12 consiste à maintenir les pièces 10, 12 plaquées l'une contre l'autre et à produire un champ électromagnétique 14 à l'aide d'un inducteur 16 de manière à générer un courant induit qui engendre un échauffement au niveau de l'interface des deux pièces 10, 12. Cet échauffement provoque une fusion des deux pièces 10, 12, au niveau de l'interface, qui permet d'obtenir, après refroidissement une liaison entre les deux pièces 10 et 12.

Le soudage par induction permet de pouvoir découpler l'action de maintien des pièces plaquées l'une contre l'autre et l'action d'échauffement, ce qui permet de pouvoir optimiser les deux actions indépendamment l'une de l'autre. De plus, l'action d'échauffement est réalisée sans contact.

Cependant, son utilisation pour assembler des pièces en matériau composite s'avère problématique car il est difficile de concentrer l'échauffement au niveau de l'interface. Cela impose un plan de drapage particulier et nécessite d'utiliser un inducteur, spécifique pour chaque configuration d'assemblage, qui est difficile à mettre au point. Toutefois, même dans ces conditions, au moins l'une des deux pièces est soumise à un échauffement, en raison de l'apparition de courants induits au niveau des renforts en carbone, qui peut amoindrir les caractéristiques mécaniques de la pièce impactée.

Selon un mode opératoire visible sur les figures 1 et 2, préalablement au soudage par induction, un suscepteur 18 est positionné au niveau de l'interface, entre les deux faces de contact F10, F12 des deux pièces 10 et 12. Selon un mode de réalisation visible notamment sur la figure 2 et décrit dans le document EP3112131, le suscepteur 18 est un grillage métallique 20 qui s'étend de manière continue sur toute la surface de l'interface des deux pièces 10 et 12. Par continue, on entend que le grillage métallique 20 comprend des fils conducteurs électriques qui s'étendent d'un bord à l'autre du grillage métallique 20.

Le suscepteur 18 permet de concentrer l'échauffement au niveau de l'interface. Ainsi, il n'est plus nécessaire de prévoir un plan de drapage particulier pour les pièces 10 et 12. La concentration de l'échauffement au niveau de l'interface étant obtenue grâce au suscepteur 18, l'inducteur 16 n'a plus besoin d'être conçu de manière à concentrer l'échauffement au niveau de l'interface. Ainsi, sa conception est simplifiée et un même inducteur peut être utilisé pour souder différentes configurations d'assemblage.

Cependant, la présence d'un suscepteur 18 sous la forme d'un grillage métallique 20 engendre un gradient de température important, de l'ordre de 80 à 100° C entre les bords de l'interface des deux pièces 10, 12 et le centre, comme illustré sur la figure 3. Par conséquent, si la température au niveau du centre de l'interface des pièces 10, 12 est supérieure à la température de fusion Tf pour obtenir une liaison entre les deux pièces 10, 12, la température Tc au niveau des bords de l'interface des pièces 10, 12 peut dépasser une température critique pour les matériaux thermoplastiques, ce qui peut engendrer une altération des caractéristiques mécaniques des pièces 10, 12.

Le document WO2018/065769 décrit plusieurs modes de réalisation de suscepteurs utilisés pour le soudage par induction de deux conduits. Les suscepteurs peuvent se présenter sous la forme de bandes de cuivre, de grillages ou d'éléments circulaires disjoints. Ces modes de réalisation ne sont pas satisfaisants.

La présente invention vise à remédier à tout ou partie des inconvénients de l'art antérieur. A cet effet, l'invention a pour objet un procédé de soudage par induction pour relier au moins des première et deuxième pièces présentant des première et deuxième faces de contact reliées par au moins une soudure par induction, le procédé de soudage par induction comprenant une étape de mise en place d'au moins un suscepteur positionné entre les première et deuxième faces de contact ainsi que des étapes de maintien des première et deuxième pièces plaquées l'une contre l'autre et de production d'un champ électromagnétique de manière à générer un courant induit qui engendre un échauffement au niveau du suscepteur. Selon l'invention, le suscepteur se présente sous la forme d'une feuille et comprend une pluralité d'éléments conducteurs discontinus positionnés dans le plan de la feuille, chacun sous la forme d'une boucle fermée.

Cette configuration permet de limiter l'apparition d'un gradient de température entre le centre et les bords du suscepteur et d'obtenir une température sensiblement homogène sur toute la surface du suscepteur.

Selon une configuration, la boucle fermée est circulaire.

Selon une autre caractéristique, chaque élément conducteur discontinu est inscrit dans un carré avec un côté inférieur ou égal à 7 mm.

Selon une configuration, la feuille a une épaisseur inférieure ou égale à 2 mm.

Selon une autre caractéristique, les éléments conducteurs discontinus recouvrent de 20 à 40% de la surface totale du suscepteur.

Selon une configuration, les éléments conducteurs discontinus sont en cuivre.

Selon une autre caractéristique, l'inducteur est paramétré de manière à ce que le champ électromagnétique ait une fréquence inférieure à 50 kHz.

Selon une autre caractéristique, le procédé de soudage par induction comprend une étape de génération d'au moins un champ électromagnétique complémentaire, en plus de celui généré par l'inducteur.

Selon une application, le procédé de soudage par induction est utilisé pour assembler au moins un raidisseur et un panneau, ledit raidisseur étant positionné contre une face de contact du panneau. Selon cette application, l'inducteur est positionné à l'opposé de la face de contact du panneau lorsqu'il génère le champ électromagnétique produisant la soudure par induction.

L'invention a également pour objet un assemblage d'au moins des première et deuxième pièces obtenu en mettant en œuvre le procédé de soudage par induction selon l'une des caractéristiques précédentes.

D'autres caractéristiques et avantages ressortiront de la description de l'invention qui va suivre, description donnée à titre d'exemple uniquement, en regard des dessins annexés parmi lesquels :
- la figure 1 est une vue latérale d'un assemblage par soudage par induction de deux pièces qui illustre un mode de réalisation de l'art antérieur,
- la figure 2 est une vue de dessus de l'assemblage visible sur la figure 1,
- la figure 3 est une courbe de température dans un plan transversal de l'assemblage visible sur la figure 1 au moment du soudage par induction,
- la figure 4 est une vue latérale d'un assemblage par soudage par induction de deux pièces qui illustre un mode de réalisation de l'invention,
- la figure 5 est une vue de dessus de l'assemblage visible sur la figure 4,
- la figure 6 est une courbe de température dans un plan transversal de l'assemblage visible sur la figure 4 au moment du soudage par induction,
- la figure 7 est une coupe d'un assemblage de deux pièces reliées par une soudure par induction qui illustre un mode de réalisation de l'invention,
- la figure 8 est une vue de dessus d'un motif d'un suscepteur qui illustre un premier mode de réalisation,
- la figure 9 est une vue de dessus d'un motif d'un suscepteur qui illustre un deuxième mode de réalisation,
- la figure 10 est une vue de dessus d'un motif d'un suscepteur qui illustre un troisième mode de réalisation,
- la figure 11 est une vue de dessus d'un suscepteur qui illustre un mode de réalisation de l'invention,
- la figure 12 est une vue de dessus d'un suscepteur qui illustre un autre mode de réalisation de l'invention, et
- la figure 13 est une vue en perspective d'un circuit électromagnétique complémentaire qui illustre un mode de réalisation de l'invention.

Sur la figure 7, on a représenté un assemblage 22 comportant au moins des première et deuxième pièces 24, 26 qui présentent des première et deuxième faces de contact F24, F26 reliées par au moins une soudure par induction 28. Pour la suite, on entend par une interface 30 des première et deuxième pièces 24, 26, la zone située entre les première et deuxième faces de contact F24 et F26, au niveau de laquelle est réalisée au moins une soudure par induction 28.

Selon un mode de réalisation, la soudure 28 est obtenue par un procédé de soudure par induction qui comprend des étapes de maintien des première et deuxième pièces 24, 26 plaquées l'une contre l'autre et de production d'un champ électromagnétique 32 de manière à générer un courant induit qui engendre un échauffement au niveau de l'interface 30 des première et deuxième pièces 24, 26.

L'outillage utilisé pour mettre en œuvre le procédé de soudure par induction comprend un système de compactage pour maintenir les première et deuxième pièces 24, 26 plaquées l'une contre l'autre ainsi qu'un inducteur 34.

Selon un mode de réalisation, le système de compactage comprend au moins une étanchéité périphérique, positionnée en périphérie de l'interface 30 pour l'isoler, et un mécanisme de mise sous vide configuré pour provoquer une dépression dans l'interface de manière à maintenir les première et deuxième pièces 24, 26 plaquées l'une contre l'autre.

Selon un autre mode de réalisation, le système de compactage comprend d'une part une vessie qui recouvre au moins l'une des première et deuxième pièces 24, 26, au moins une étanchéité périphérique positionnée en périphérie de la vessie de manière à isoler une cavité dans laquelle est positionnée l'interface 30 et, d'autre part, un mécanisme de mise sous vide configuré pour provoquer une dépression à l'intérieur de la cavité de manière à maintenir les première et deuxième pièces 24, 26 plaquées l'une contre l'autre.

Bien entendu, l'invention n'est pas limitée à ce mode de réalisation pour le système de compactage, ce dernier étant configuré pour générer une pression de contact sensiblement homogène sur toute la superficie de la ou des première et/ou deuxième face(s) de contact F24, F26.

L'inducteur 34 est configuré pour générer un champ électromagnétique au niveau de l'interface 30.

L'assemblage 22 comprend au moins un suscepteur 36 positionné dans l'interface 30, entre les première et deuxième faces de contact F24, F26. La présence d'un suscepteur 36 permet de concentrer l'échauffement au niveau du suscepteur 36 et de limiter les niveaux de températures dans les première et deuxième pièces 24, 26. Ainsi, le procédé de soudage par induction comprend une étape de mise en place d'au moins un suscepteur 36 positionné dans l'interface 30, entre les première et deuxième faces de contact F24, F26.

Selon une caractéristique de l'invention, le suscepteur 36 comprend une pluralité d'éléments conducteurs discontinus 38, qui ne s'étendent pas d'un bord à l'autre du suscepteur 36. Cette configuration limite l'apparition d'un gradient de température entre le centre et les bords du suscepteur 36. Ainsi, comme illustré sur la figure 6, la température est sensiblement homogène sur toute la surface du suscepteur 36.

Les éléments conducteurs discontinus 38 sont disjoints et se présentent chacun sous la forme d'une boucle fermée. Ainsi, la forme en boucle fermée permet d'obtenir un rebouclage sur lui-même du courant induit généré par le champ électromagnétique.

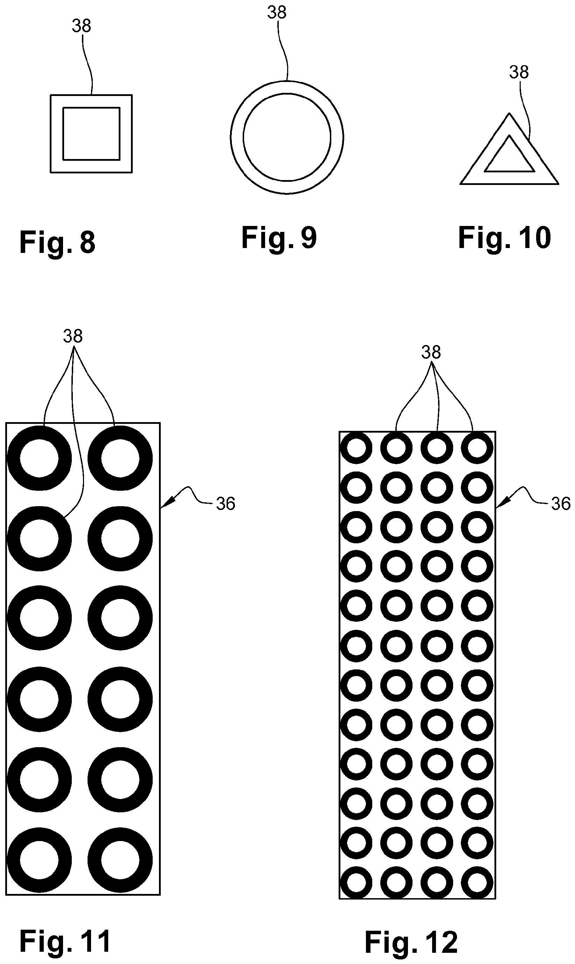

Les éléments conducteurs discontinus 38 peuvent décrire chacun un motif carré ou rectangulaire, comme illustré sur la figure 8 ; circulaire, comme illustré sur la figure 9 ; triangulaire, comme illustré sur la figure 10. Bien entendu, l'invention n'est pas limitée à ces motifs pour les boucles fermées.

Le suscepteur 36 se présente sous la forme d'une feuille comportant une pluralité d'éléments conducteurs discontinus 38 positionnés dans un même plan, celui de la feuille. Cette feuille a une épaisseur inférieure ou égale à 2 mm. Selon une configuration, la feuille a une épaisseur de l'ordre de 80 µm.

Selon une autre caractéristique, les éléments conducteurs discontinus 38 recouvrent de 20 à 40% de la surface totale du suscepteur 36. Selon une configuration, les éléments conducteurs discontinus 38 recouvrent 30% de la surface totale du suscepteur 36.

Selon un mode de réalisation, pour obtenir une température homogène sur une zone du suscepteur 36, le suscepteur 36 présente, sur cette zone, des éléments conducteurs discontinus 38 identiques, répartis de manière homogène, comme illustré sur les figures 11 et 12.

Selon un premier mode de réalisation visible sur la figure 11, les éléments conducteurs discontinus 38 sont des boucles fermées circulaires qui s'inscrivent chacune dans un carré de 7 mm de côté.

Selon un deuxième mode de réalisation visible sur la figure 12, les éléments conducteurs discontinus 38 sont des boucles fermées circulaires qui s'inscrivent chacune dans un carré de 3.5 mm de côté.

Quel que soit le mode de réalisation, chaque élément conducteur discontinu 38 s'inscrit dans un carré avec un côté inférieur ou égal à 7mm

Le suscepteur 36 est métallique. Selon un mode de réalisation optimisé, le suscepteur 36 (plus particulièrement les éléments conducteurs discontinus 38) est en cuivre.

Le suscepteur 36 peut comprendre des éléments conducteurs discontinus 38 tous identiques, répartis de manière homogène sur toute la surface du suscepteur 36. En variante, le suscepteur 36 peut comprendre plusieurs zones avec chacune des éléments conducteurs discontinus 38, avec des motifs différents d'une zone à l'autre et/ou avec une répartition différentes d'une zone à l'autre. Cette configuration permet d'adapter le suscepteur 36 en fonction de la géométrie des première et deuxième pièces 24, 26.

Selon un mode de réalisation, l'inducteur 34 peut être identique à ceux de l'art antérieur. Un même inducteur 34 peut être utilisé pour différentes configurations de pièces. Selon l'invention, c'est le suscepteur 36 qui est ajusté en fonction de la configuration des pièces à assembler et non l'inducteur 34.

Selon une configuration, l'inducteur 34 est paramétré de manière à ce que le champ électromagnétique ait une fréquence inférieure à 50 kHz, de préférence comprise entre 20 et 30 kHz.

Pour obtenir une puissance de 100W au niveau du suscepteur 36, avec une fréquence de 50kHz, il faut un champ électromagnétique de l'ordre de 18400 A/m.

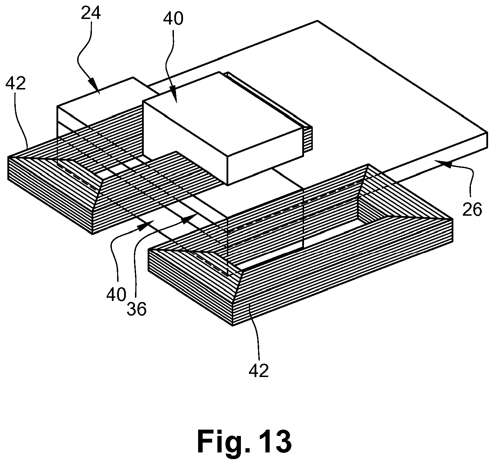

Selon un mode de réalisation, l'outillage pour mettre en œuvre le procédé de soudage par induction comprend, en plus du système de compactage et de l'inducteur 34, au moins un circuit magnétique complémentaire 40 configuré pour générer un champ électromagnétique complémentaire 42, comme illustré sur la figure 13. Ainsi, le procédé de soudage par induction comprend une étape de génération d'au moins un champ électromagnétique complémentaire 42, en plus de celui généré par l'inducteur 34. Cette configuration permet d'obtenir la puissance requise pour le soudage par induction, avec une fréquence faible en utilisant un inducteur 34 existant.

Selon une application, la première pièce 24 est un raidisseur qui présente une section en L et la deuxième pièce 26 est un panneau comme par exemple la peau d'un aéronef. Selon cette application, l'inducteur 34 est positionné à l'opposé de la face de contact F26 lorsqu'il génère le champ électromagnétique produisant le soudage par induction. Cette configuration, combinée à une fréquence faible, permet de limiter la température dans les première et deuxième pièces 24, 26.

## Revendications

1. Procédé de soudage par induction pour relier au moins des première et deuxième pièces (24, 26) présentant des première et deuxième faces de contact (F24, F26) reliées par au moins une soudure par induction (28), le procédé de soudage par induction comprenant une étape de mise en place d'au moins un suscepteur (36) positionné entre les première et deuxième faces de contact (F24, F26) et des étapes de maintien des première et deuxième pièces (24, 26) plaquées l'une contre l'autre et de production d'un champ électromagnétique (32) de manière à générer un courant induit qui engendre un échauffement au niveau du suscepteur (36), **caractérisé en ce que** le suscepteur (36) se présente sous la forme d'une feuille et comprend une pluralité d'éléments conducteurs discontinus (38) positionnés dans le plan de la feuille, chacun sous la forme d'une boucle fermée.

2. Procédé de soudage par induction selon la revendication précédente, **caractérisé en ce que** chaque élément conducteur discontinu (38) est une boucle fermée circulaire.

3. Procédé de soudage par induction selon la revendication 1 ou 2, **caractérisé en ce que** chaque élément conducteur discontinu (38) est inscrit dans un carré avec un côté inférieur ou égal à 7 mm.

4. Procédé de soudage par induction selon l'une des revendications précédentes, **caractérisé en ce que** la feuille a une épaisseur inférieure ou égale à 2 mm.

5. Procédé de soudage par induction selon l'une des revendications précédentes, **caractérisé en ce que** les éléments conducteurs discontinus (38) recouvrent de 20 à 40% de la surface totale du suscepteur (36).

6. Procédé de soudage par induction selon l'une des revendications précédentes, **caractérisé en ce que** les éléments conducteurs discontinus (38) sont en cuivre.

7. Procédé de soudage par induction selon l'une des revendications précédentes, **caractérisé en ce que** l'inducteur (34) est paramétré de manière à ce que le champ électromagnétique ait une fréquence inférieure à 50 kHz.

8. Procédé de soudage par induction selon l'une des revendications précédentes, **caractérisé en ce que** le procédé de soudage par induction comprend une étape de génération d'au moins un champ électromagnétique complémentaire (42), en plus de celui généré par l'inducteur (34).

9. Procédé de soudage par induction selon l'une des revendications précédentes, utilisé pour assembler au moins un raidisseur (24) et un panneau (26), ledit raidisseur (24) étant positionné contre une face de contact (F26) du panneau (26), **caractérisé en ce que** l'inducteur (34) est positionné à l'opposé de la face de contact (F26) du panneau (26) lorsqu'il génère le champ électromagnétique produisant la soudure par induction (28).

10. Assemblage d'au moins des première et deuxième pièces (24, 26) obtenu en mettant en œuvre le procédé de soudage par induction selon l'une des revendications précédentes.

## Patentansprüche

1. Induktionsschweißverfahren zum Verbinden wenigstens eines ersten und eines zweiten Werkstücks (24, 26) mit einer ersten und einer zweiten Kontaktfläche (F24, F26), die durch wenigstens eine Induktionsschweißung (28) verbunden sind, wobei das Induktionsschweißverfahren einen Schritt des Anordnens mindestens eines Suszeptors (36) zwischen der ersten und der zweiten Kontaktfläche (F24, F26) und Schritte des Gegeneinanderhaltens des ersten und des zweiten Werkstücks (24, 26) und des Erzeugens eines elektromagnetisches Feldes (32) umfasst, um einen induzierten Strom zu erzeugen, der eine Erwärmung am Suszeptor (36) bewirkt, **dadurch gekennzeichnet, dass** der Suszeptor (36) die Form eines Blattes hat und eine Vielzahl von diskontinuierlichen leitenden Elementen (38) aufweist, die in der Ebene des Blattes angeordnet sind und jeweils als geschlossene Schleife ausgebildet sind.

2. Induktionsschweißverfahren nach dem vorhergehenden Anspruch, **dadurch gekennzeichnet, dass** jedes diskontinuierliche leitende Element (38) eine kreisförmige geschlossene Schleife ist.

3. Induktionsschweißverfahren nach Anspruch 1 oder 2, **dadurch gekennzeichnet, dass** jedes diskontinuierliche leitende Element (38) in ein Quadrat mit einer Seite von kleiner oder gleich 7 mm eingeschrieben ist.

4. Induktionsschweißverfahren nach einem der vorhergehenden Ansprüche, **dadurch gekennzeichnet, dass** das Blatt eine Dicke von kleiner oder gleich 2 mm aufweist.

5. Induktionsschweißverfahren nach einem der vorhergehenden Ansprüche, **dadurch gekennzeichnet, dass** die diskontinuierlichen leitenden Elemente (38) 20 bis 40 % der Gesamtfläche des Suszeptors (36) bedecken.

6. Induktionsschweißverfahren nach einem der vorhergehenden Ansprüche, **dadurch gekennzeichnet, dass** die diskontinuierlich leitenden Elemente (38) aus Kupfer sind.

7. Induktionsschweißverfahren nach einem der vorhergehenden Ansprüche, **dadurch gekennzeichnet, dass** der Induktor (34) so parametriert ist, dass das elektromagnetische Feld eine Frequenz von weniger als 50 kHz hat.

8. Induktionsschweißverfahren nach einem der vorhergehenden Ansprüche, **dadurch gekennzeichnet, dass** das Induktionsschweißverfahren einen Schritt der Erzeugung mindestens eines komplementären elektromagnetischen Feldes (42), zusätzlich zu dem durch den Induktor (34) erzeugten, umfasst.

9. Induktionsschweißverfahren nach einem der vorhergehenden Ansprüche, das dazu verwendet wird, wenigstens eine Versteifung (24) und eine Platte (26) zusammenzufügen, wobei die Versteifung (24) gegen eine Kontaktfläche (F26) der Platte (26) positioniert wird, **dadurch gekennzeichnet, dass** der Induktor (34) auf der der Kontaktfläche (F26) entgegengesetzten Seite der Platte (26) positioniert wird, wenn er das elektromagnetische Feld erzeugt, das die Induktionsschweißung (28) bewirkt

10. Baugruppe aus wenigstens einem ersten und einem zweiten Werkstück (24, 26), erhalten durch Ausführen des Induktionsschweißverfahrens nach einem der vorhergehenden Ansprüche.

## Claims

1. Induction welding process for joining at least first and second parts (24, 26) having first and second contact faces (F24, F26) joined by at least one induction weld (28), the induction welding process comprising a step of placing at least one susceptor (36) positioned between the first and second contact faces (F24, F26) and steps of holding the first and second parts (24, 26) pressed against each other and of producing an electromagnetic field (32) so as to generate an induced current that engenders heating of the susceptor (36), **characterized in that** the susceptor (36) takes the form of a sheet and comprises a plurality of discontinuous conductive elements (38) positioned in the plane of the sheet, each discontinuous conductive element taking the form of a closed loop.

2. Induction welding process according to the preceding claim, **characterized in that** each discontinuous conductive element (38) is a circular closed loop.

3. Induction welding process according to Claim 1 or 2, **characterized in that** each discontinuous conductive element (38) is inscribed in a square with a side length shorter than or equal to 7 mm.

4. Induction welding process according to one of the preceding claims, **characterized in that** the sheet has a thickness smaller than or equal to 2 mm.

5. Induction welding process according to one of the preceding claims, **characterized in that** the discontinuous conductive elements (38) cover from 20 to 40% of the total area of the susceptor (36).

6. Induction welding process according to one of the preceding claims, **characterized in that** the discontinuous conductive elements (38) are made of copper.

7. Induction welding process according to one of the preceding claims, **characterized in that** the inductor (34) is parameterized so that the electromagnetic field has a frequency lower than 50 kHz.

8. Induction welding process according to one of the preceding claims, **characterized in that** the induction welding process comprises a step of generating at least one complementary electromagnetic field (42), in addition to the field generated by the inductor (34).

9. Induction welding process according to one of the preceding claims, used to assemble at least one stiffener (24) and one panel (26), said stiffener (24) being positioned against a contact face (F26) of the panel (26), **characterized in that** the inductor (34) is positioned opposite the contact face (F26) of the panel (26) when it generates the electromagnetic field that produces the induction weld (28).

10. Assembly of at least first and second parts (24, 26), said assembly being obtained by implementing the induction welding process according to one of the preceding claims.
